(19) Europäisches Patentamt
European Patent Office
Office européen des brevets

(11) EP 2 585 526 B1

(12) # FASCICULE DE BREVET EUROPEEN

(45) Date de publication et mention de la délivrance du brevet:
**30.12.2015 Bulletin 2015/53**

(21) Numéro de dépôt: **11730253.9**

(22) Date de dépôt: **23.06.2011**

(51) Int Cl.:
***C08L 9/06*** (2006.01) ***C08L 21/00*** (2006.01)
***B60C 1/00*** (2006.01)

(86) Numéro de dépôt international:
**PCT/EP2011/060583**

(87) Numéro de publication internationale:
**WO 2011/161222 (29.12.2011 Gazette 2011/52)**

(54) **COMPOSITION DE CAOUTCHOUC COMPRENANT UNE CHARGE THERMOPLASTIQUE ET UN AGENT COMPATIBILISANT**

KAUTSCHUKZUSAMMENSETZUNG MIT EINEM THERMOPLASTISCHEN FÜ LLSTOFF UND EINEM VERTRÄGLICHMACHENDES MITTEL

RUBBER COMPOSITION COMPRISING A THERMOPLASTIC REINFORCING FILLER AND A COMPATIBILISING AGENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2010 FR 1054983**

(43) Date de publication de la demande:
**01.05.2013 Bulletin 2013/18**

(73) Titulaires:
- **Compagnie Générale des Etablissements Michelin**
**63000 Clermont-Ferrand (FR)**
- **MICHELIN Recherche et Technique S.A.**
**1763 Granges-Paccot (CH)**

(72) Inventeurs:
- **CUSTODERO, Emmanuel**
**F-63040 Clermont-Ferrand Cedex 9 (FR)**
- **THOMASSON, Damien**
**F-63040 Clermont-Ferrand Cedex 9 (FR)**
- **ABAD, Vincent**
**F-63040 Clermont-Ferrand Cedex 9 (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
**EP-A1- 0 117 834** **WO-A1-94/24208**
**US-A- 6 036 800** **US-A1- 2002 019 484**
**US-A1- 2007 208 135**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 585 526 B1

## Description

La présente invention se rapporte à une composition de caoutchouc utilisable notamment pour la fabrication dé pneumatiques ou de produits semi-finis pour pneumatiques tels que des bandes de roulement, ladite composition étant à base d'un élastomère diénique, d'une charge renforçante, de particules d'un matériau thermoplastique particulier, d'un agent compatibilisant et d'un système de vulcanisation.

Dans le domaine de la fabrication des pneumatiques et en particulier de la formulation des compositions caoutchouteuses en contact avec le sol, appelées bandes de roulement, on cherche généralement à trouver le meilleur compromis possible entre des performances antagonistes telles que le comportement du véhicule, la résistance au roulement, l'adhérence sur sols sec et humide et l'usure.

En particulier, on souhaiterait diminuer le module des matériaux constituant les bandes de roulement pour favoriser l'adhérence et l'indentation de la bande de roulement dans le sol, mais en même temps on préfèrerait des bandes dé roulement de très forte rigidité pour les performances usure et comportement routier.

Toute modification de la formulation des bandes de roulement entraîne des conséquences sur le compromis entre ces performances.

Il est connu qu'il est possible d'améliorer l'adhérence des pneumatiques dans des conditions de freinage appuyé sans modifier l'hystérésis en conditions usuelles de roulage, donc sans modifier la résistance au roulement des pneumatiques concernés.

En particulier, il est connu que le compromis ci-dessus pouvait être amélioré en réalisant des compositions de caoutchouc qui conduisent à des bandes de roulement dont le module d'élasticité diminue fortement en surface suite à une élévation de température. En effet, une telle diminution du module, par exemple lors d'un freinage qui s'accompagne toujours d'une augmentation locale de la température, permet l'augmentation du taux de contact effectif de la bande de roulement avec le sol, notamment rugueux, et par là même des performances liées au contact, notamment l'adhérence au sol et donc la capacité de freinage.

Ce résultat peut être obtenu en introduisant dans une composition de caoutchouc pour la fabrication de pneumatiques, à base d'un ou plusieurs élastomères diéniques, d'une ou plusieurs charges renforçantes et d'un système de vulcanisation, des particules d'un ou plusieurs matériaux thermoplastiques.

Il est connu du document WO 2004/039872 un procédé de préparation d'une composition à base d'élastomère diénique et de polymère thermoplastique choisi parmi les polymères amorphes de température de transition vitreuse supérieure à 80°C et les polymères cristallins de température de fusion supérieure à 190°C. Le procédé comprend une étape de pré-mélange du polymère thermoplastique avec une portion de l'élastomère diénique pour obtenir un mélange-maître, ce pré-mélange étant effectué à une température égale ou supérieure à la température de transition vitreuse ou égale ou supérieure à la température de fusion diminuée de 20°C, puis une étape de mélange du mélange-maître avec la portion restante de l'élastomère diénique.

Cependant, l'utilisation de telles compositions peut entraîner une forte diminution de la contrainte de rupture, ce qui peut être pénalisant en terme d'usure.

Le document US 2007/208135 divulgue une composition réticulée comprenant au moins un élastomère, au moins un copolymère triblocs et au moins un polymère thermoplastique. Cette composition peut être utilisée pour la préparation de pneumatiques. Cependant, le copolymère triblocs n'est pas divulgué spécifiquement comme comprenant un bloc élastomère diénique et un bloc thermoplastique, ni que ce copolymère est compatible avec le polymère thermoplastique.

Le document US-A-2002/019484 divulgue une composition élastomérique vulcanisable comprenant une base polymérique insaturée réticulable et au moins un composé organique, solide à température ambiante, insoluble dans la base polymérique et avec une température de transition du premier ou du second ordre comprise entre 80°C et 160°C. Cette composition ne comporte pas de copolymère à bloc en tant qu'agent compatibilisant.

Les documents EP-A-0117834, EP-A-1 344 796 et US-A-6 036 800 divulguent des compositions de caoutchouc destinées à la préparation de pneumatiques et comprenant une élastomère diénique et un polymère thermoplastique. Ces compositions ne comportent pas de copolymère à blocs en tant qu'agent compatibilisant.

Le document WO-A-94/24208 décrit une composition d'élastomère diénique à base de caoutchouc naturel et comprenant un copolymère isobutylène-méthylstyrène (I-PMS) et un copolymère I-PMS greffé par de l'anhydride acétique. Cependant, cette composition ne comprend pas un agent compatibilisant choisis parmi les copolymères à blocs comprenant un bloc élastomère diénique, et un bloc thermoplastique compatible avec des particules de matériaux thermoplastiques.

Il existe donc un besoin de fournir une composition de caoutchouc pour la fabrication de pneumatiques, comprenant des particules de matériaux thermoplastiques, dans lesquelles les particules sont convenablement dispersées, tout en assurant une contrainte à la rupture satisfaisante.

L'invention a donc pour objet une composition de caoutchouc utilisable notamment pour la fabrication de pneumatiques, à base d'un ou plusieurs élastomères diéniques, d'une ou plusieurs charges renforçantes et d'un système

de vulcanisation, comprenant des particules d'un ou plusieurs matériaux thermoplastiques choisis parmi

les matériaux thermoplastiques de températures de fusion ou de ramollissement variant de 80°C à 300°C, ladite composition contenant un ou plusieurs agents compatibilisants choisis parmi les copolymères à blocs comprenant au moins un premier bloc élastomère diénique, et au moins un second bloc thermoplastique compatible avec le ou lesdits matériaux thermoplastiques.

L'invention a également pour objet un procédé pour préparer une composition de caoutchouc, à base d'un ou plusieurs élastomères diéniques, d'une ou plusieurs charges renforçantes et d'un système de réticulation, comprenant des particules d'un ou plusieurs matériaux thermoplastiques de température de fusion ou de ramollissement ($T_{M1}$) variant de 80 à 300°C et un ou plusieurs agents compatibilisants de température de fusion ou de ramollissement ($T_{M2}$) choisis parmi les copolymères à blocs comprenant au moins un premier bloc élastomère diénique et au moins un second bloc thermoplastique compatible avec le ou les matériaux thermoplastiques, ledit procédé comprenant les étapes suivantes :

- incorporer à ou aux élastomères diéniques, au cours d'une première étape dite « non-productive », les particules du ou des matériaux thermoplastiques et le ou les agents compatibilisants, séparément ou sous la forme d'un mélange maître préparé au préalable, et la ou les charges renforçantes, en malaxant thermomécaniquement le tout, en une ou plusieurs fois, jusqu'à atteindre une température maximale supérieure à la plus élevée des températures de fusion ou de ramollissement ($T_{M1}$, $T_{M2}$) des matériaux thermoplastiques et agents compatibilisants, ou supérieure à la température de fusion ou de ramollissement $T_M$ dudit mélange maître dans le cas où les particules du ou desdits matériaux thermoplastiques et le ou les agents compatibilisants ont été introduits sous forme d'un mélange maître,
- refroidir l'ensemble à une température inférieure à 100°C,
- incorporer ensuite, au cours d'une seconde étape dite « productive », le système de réticulation, puis
- malaxer le tout jusqu'à une température maximale inférieure à 120°C.

L'invention a encore pour objet l'utilisation d'une composition selon l'invention pour la fabrication d'un article fini ou d'un produit semi-fini destiné à un système de liaison au sol de véhicule automobile, tel que pneumatique, appui interne de sécurité pour pneumatique, roue, ressort en caoutchouc, articulation élastomérique, autre élément de suspension et anti-vibratoire. En particulier, la composition selon l'invention peut être utilisée pour la fabrication de produits semi-finis en caoutchouc destinés à des pneumatiques, tel que les bandes de roulement, les nappes d'armature de sommet, les flancs, les nappes d'armature de carcasse, les bourrelets, les protecteurs, les sous-couches, les blocs de caoutchouc et autres gommes internes, notamment les gommes de découplage, destinés à assurer la liaison ou l'interface entre les zones précitées des pneumatiques.

L'invention a encore pour objet un article fini ou produit semi-fini destiné à un système de liaison au sol de véhicule automobile, en particulier les pneumatiques et produits semi-finis pour pneumatiques, comprenant une composition selon l'invention. Les pneumatiques conformes à l'invention sont notamment destinés à des véhicules tourisme comme à des véhicules industriels choisis parmi camionnettes, « Poids-lourd »- i.e. métro, bus, engins de transport routier (campions, tracteurs, remorques), véhicules hors-la-route -, engin agricoles ou de génie civil, avions, autres véhicules de transport ou de manutention.

L'invention ainsi que ses avantages seront aisément compris à la lumière de la description et des exemples de réalisation qui suivent, ainsi que de la figure 1 relative à ces exemples qui représente des courbes de variation de module élastique en fonction de la température pour des compositions de caoutchouc, et des figures 2 et 3 relatives à ces exemples qui représentent des courbes d'évolution de module sécant vrai en fonction de l'allongement pour ces compositions de caoutchouc.

## I. Mesures et tests utilisés

Propriétés dynamiques

Les caractérisations dynamiques des matériaux élastomères sont réalisées sur un viscoanalyseur (VA4000 de la société Métravib), selon la norme ASTM D5992-96. On enregistre la réponse d'un échantillon de composition vulcanisée (éprouvette cylindrique de 4 mm d'épaisseur et de 100 mm$^2$ de section), soumis à une sollicitation sinusoïdale en cisaillement simple alterné, à une fréquence de 10 Hz, lors d'un balayage en température de 0°C à 150°C avec une rampe de 5°/mn, sous une contrainte maximale de 0,7 MPa. Les résultats exploités sont le module de cisaillement dynamique G* et le facteur de perte tan δ dans la gamme de température donnée. On a :

$$G^* = \sqrt{G'^2 + G''^2} \quad \text{et} \quad \tan\delta = G''/G'$$

G* : module de cisaillement dynamique en MPa ;
G' : module réel de cisaillement en MPa ;
G" : module de perte en MPa ; et
δ : déphasage entre la déformation imposée et la contrainte mesurée.

Essais de traction

Ces essais de traction permettent de déterminer les contraintes d'élasticité et les propriétés à la rupture. Sauf indication différente, ils sont effectués conformément à la norme ASTM D412-98. On utilise les éprouvettes ASTM C d'épaisseur 2,5 mm. Les courbes force déplacement sont faites en première élongation jusqu'à la rupture de l'éprouvette, à une vitesse de 500 mm/mn, une température de 23°C ± 2°C, et dans les conditions normales d'hygrométrie (50 ± 5% d'humidité relative). On mesure le module sécant vrai en fonction de la déformation ou allongement, c'est-à-dire, pour un allongement donné, le rapport entre la contrainte d'extension rapportée à la section vraie de l'éprouvette et l'allongement. Le module sécant vrai s'exprime en MPa.

**II. Conditions de réalisation de l'invention**

Comme expliqué précédemment, la composition selon l'invention est à base d'un ou plusieurs élastomères diéniques, d'une ou plusieurs charges renforçantes, d'un système de vulcanisation, de particules particulières d'un ou plusieurs matériaux thermoplastiques ainsi que d'un ou plusieurs agents compatibilisants.

Par l'expression composition « à base de », il faut entendre une composition comportant le mélange et/ou le produit de réaction des différents constituants utilisés, certains de ces constituants de base étant susceptibles de, ou destinés à réagir entre eux, au moins en partie, lors des différentes phases de fabrication de la composition, en particulier au cours de sa vulcanisation.

Dans la présente description, sauf indication expresse différente, tous les pourcentages (%) sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

II-1. Elastomère diénique

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:

(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que

la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion, en émulsion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 ou WO 2008/141702), des groupes alkoxysilane (tels que décrits par exemple dans FR 2 765 882 ou US 5 977 238), des groupes carboxyliques (tels que décrits par exemple dans WO 01/92402, US 6 815 473, WO 2004/096865 ou US 2006/0089445) ou encore des groupes polyéthers (tels que décrits par exemple dans EP 1 127 909, US 6 503 973, WO 2009/000750 ou WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre 5 °C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques de la composition selon l'invention sont choisis préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR), de préférence les copolymères de butadiène-styrène.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de

frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

La composition selon l'invention peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

<u>II-2. Particules de matériau thermoplastique</u>

Comme expliqué précédemment, la composition de caoutchouc selon l'invention comprend des particules d'un ou plusieurs matériaux thermoplastiques. Le ou les matériaux thermoplastiques sont choisis parmi les matériaux thermoplastiques dont les températures de fusion ou de ramollissement varient de 80°C à 300°C.

La température de fusion d'un matériau thermoplastique cristallin est déterminée par analyse calorimétrique différentielle (DSC) selon la norme ISO 1137.

On rappelle que le point ou la température de ramollissement (en anglais *"softening point"*) est la température à laquelle le matériau, par exemple sous forme de poudre, s'agglutine. Le point ou la température de ramollissement d'un matériau thermoplastique est mesuré selon la norme ISO 4625 (méthode *"dring and ball"*).

Les matériaux thermoplastiques sont généralement choisis parmi les polypropylènes, les polyéthylènes, les polystyrènes, les copolymères acrylonitrile/butadiène/styrène, les polyacrylates, les polyamides, les polyphénylène éthers, les polycarbonates, les polyacétals, les polyuréthannes thermoplastiques, les polymères thermoplastiques fluorés et les polyesters.

De préférence, les polyesters sont choisis parmi les polyéthylène téréphtalates, les polybutylène téréphtalates et les polyéthylène naphtoates.

Les polymères fluorés peuvent être choisis parmi les copolymères de tétrafluoréthylène et hexafluoropropène, les copolymères de tétrafluoréthylène et perfluorovinyléther, les copolymères de tétrafluoréthylène et d'éthylène et le polyfluorure de vinylidène.

Le polyacrylate peut être un polyméthylméthacrylate.

De préférence, la température de fusion ou de ramollissement du ou des matériaux thermoplastiques varie de 80°C à 200°C.

De préférence, les particules présentent un diamètre moyen (en volume) inférieur ou égal à 200 μm, de préférence inférieur à 100 μm, mieux compris entre 50 et 100 μm.
La détermination de la taille moyenne en volume des particules de matériau thermoplastique a été réalisée avec un compteur Coulter.
Un compteur Coulter est un appareil destiné à compter les particules et les cellules, et à en mesurer la taille. On l'utilise par exemple pour les bactéries, ou pour l'analyse de la distribution de la taille des particules dans la mesure de la qualité de l'air. Le compteur Coulter est commercialisé depuis les années 1950.
Le compteur détecte le changement de la résistance électrique lorsque l'on fait passer un électrolyte contenant des particules ou des cellules au travers d'une petite ouverture que l'on peut calibrer. Les cellules, n'étant elles-mêmes pas conductrices, génèrent de ce fait une variation de la résistance. Cette variation dépend de la taille de chaque particule comptée.
Les particules du ou desdits matériaux thermoplastiques représentent de préférence moins de 100 pce, de préférence de 10 à 70 pce, et très préférentiellement de 20 à 40 pce.
De préférence, les particules représentent au plus 30%, mieux au plus 20%, en volume par rapport au volume total de la composition.
La présence dans la composition de caoutchouc de ces particules de matériaux thermoplastiques dont la température de fusion ou de ramollissement varie de 80°C à 300°C permet lé ramollissement de la composition lors de l'élévation de la température, en particulier en cas de freinage. Cela permet d'augmenter la surface de contact de la bande de roulement sur le sol, en particulier rugueux, et donc l'adhérence.

II-3. Agent compatibilisant

Comme expliqué précédemment, la composition selon l'invention comprend un ou plusieurs agents compatibilisant.
Le ou les agents compatibilisants permettent de lier les particules de matériaux thermoplastiques avec le ou les élastomères diéniques de la composition.
Le ou les agents compatibilisants peuvent être caractérisés par leur température de fusion ou leur température de ramollissement.
La température de fusion d'un matériau thermoplastique cristallin est déterminée par analyse calorimétrique différentielle (DSC) selon la norme ISO 1137.
On rappelle que le point ou la température de ramollissement (en anglais *"softening point"*) est la température à laquelle le matériau, par exemple sous forme de poudre, s'agglutine. Le point ou la température de ramollissement d'un matériau thermoplastique est mesuré selon la norme ISO 4625 (méthode *"ring and ball"*).
Selon l'invention, le ou les agents compatibilisants sont choisis parmi les copolymères à blocs comprenant au moins un premier bloc élastomère diénique, et au moins un second bloc thermoplastique compatible avec le ou lesdits matériaux thermoplastiques.
On entend par constituants ou matériaux « compatibles » deux constituants tels que leur mélange présente en caractérisation par analyse calorimétrique différentielle (DSC) un seul pic de transition vitreuse et non pas deux pics correspondant aux deux pics de transition vitreuse des constituants.
Le ou lesdits premiers blocs de type élastomère diénique permettent d'assurer la compatibilité avec le ou les élastomères diéniques de la composition. En particulier, les liaisons diéniques de ces premiers blocs permettent une covulcanisation avec les élastomères diéniques de la composition.
Par bloc élastomère diénique, on entend un bloc d'un ou plusieurs élastomères, chacun issu au moins en partie (i.e. homopolymère ou copolymère) de monomères diènes (monomères porteurs de deux doubles liaisons carbone-carbone, conjuguées ou non).
Ainsi, le ou les élastomères diéniques formant le ou les premiers blocs peuvent être choisis parmi tous les élastomères diéniques cités précédemment au sujet des élastomères diéniques compris dans la composition selon l'invention.
En particulier le ou les premiers blocs élastomère diénique peuvent être choisis parmi les blocs de polybutadiène, les blocs de polyisoprène de synthèse, les blocs de copolymère de butadiène et les blocs de copolymère d'isoprène.
De préférence, la masse moléculaire du ou des élastomères diéniques formant le ou les premiers blocs est supérieure ou égale à la masse d'enchevêtrement.
Par bloc thermoplastique compatible avec le ou lesdits matériaux thermoplastiques, on entend un bloc d'un ou plusieurs matériaux thermoplastiques compatible avec le ou les matériaux thermoplastiques des particules.
Le ou lesdits seconds blocs de type thermoplastique permettent d'assurer la compatibilité avec les particules de matériaux thermoplastiques.
Le ou lesdits seconds blocs thermoplastiques peuvent être choisis parmi les blocs de tout matériau thermoplastique, tels que ceux décrits au sujet des particules de la composition, dès lors que ces blocs sont compatibles avec

le ou les matériaux thermoplastiques des particules de la composition.

Ainsi, le ou les seconds blocs de type thermoplastique peuvent être choisis parmi les blocs de polypropylènes, les polyéthylènes, les polystyrènes, les copolymères acrylonitrile/butadiène/styrène, les polyméthylméthacrylates, les polyamides, les polyphénylène éthers, les polycarbonates, les polyacétals, les polyuréthannes thermoplastiques, les polymères thermoplastiques fluorés et les polyesters.

De préférence, la masse molaire en poids du ou des seconds blocs thermoplastiques est supérieure à 1500 g/mol.

Selon un premier mode de réalisation, le ou les agents compatibilisants sont des copolymères diblocs.

Selon un deuxième mode de réalisation, le ou les agents compatibilisants sont des copolymères triblocs comprenant un premier bloc élastomère diénique et deux second blocs thermoplastiques.

Selon un troisième mode de réalisation, la composition selon l'invention comprend à titre d'agents compatibilisants un ou plusieurs agents compatibilisants qui sont des copolymères diblocs et un ou plusieurs agents compatibilisants qui sont des copolymères triblocs comprenant un premier bloc élastomère diénique et deux second blocs thermoplastiques.

Le ou les copolymères diblocs peuvent être choisis parmi les copolymères diblocs styrène/butadiène, les copolymères diblocs styrène/isoprène et les copolymères diblocs styrène/(copolymère styrène/butadiène statistique).

Le ou les copolymères triblocs peuvent être choisis parmi les copolymères triblocs styrène/butadiène/styrène, les copolymères triblocs styrène/isoprène/styrène, les copolymères triblocs styrène/(copolymère styrène/butadiène statistique)/styrène et les copolymères triblocs styrène/ butadiène/ méthacrylate.

Ainsi, par exemple, lorsque les particules de matériau thermoplastiques sont des particules de polystyrène, le ou les agents compatibilisants peuvent être choisis parmi les copolymères diblocs styrène/butadiène, les copolymères diblocs styrène/isoprène, les copolymères diblocs styrène/(copolymère styrène-butadiène statistique), les copolymères triblocs styrène/isoprène/styrène, les copolymères triblocs styrène/butadiène/styrène et les copolymères triblocs styrène/(copolymère styrène-butadiène statistique)/styrène.

De préférence, lorsque les particules de matériau thermoplastiques sont des particules de polystyrène, le ou les agents compatibilisants sont choisis parmi les copolymères diblocs styrène/butadiène, les copolymères diblocs styrène/isoprène, les copolymères triblocs styrène/butadiène/styrène, les copolymères triblocs styrène/isoprène/styrène, et leurs mélanges.

Lorsque les particules de matériau thermoplastique sont des particules de polyphénylène éther, le ou les agents compatibilisants peuvent être choisis parmi les copolymères diblocs styrène/butadiène, les copolymères diblocs styrène/isoprène, les copolymères diblocs styrène/(copolymère styrène-butadiène statistique), les copolymères triblocs styrène/butadiène/styrène et les copolymères triblocs styrène/isoprène/styrène.

De préférence, lorsque les particules de matériau thermoplastique sont des particules de polyphénylène éther, le ou les agents compatibilisants sont choisis parmi les copolymères diblocs styrène/butadiène, les copolymères diblocs styrène/isoprène, les copolymères triblocs styrène/butadiène/styrène, les copolymères triblocs styrène/isoprène/styrène et leurs mélanges.

De préférence, la somme du volume des particules et du volume desdits second blocs thermoplastiques compatibles avec le ou lesdits matériaux thermoplastiques est inférieur ou égale à 45% du volume total de la composition.

De préférence encore, le rapport volumique particules/agent(s) compatibilisant(s) est supérieur ou égal à 0,05.

II-4. Charge renforçante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de

renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, les silices à haute surface spécifique telles que décrites dans la demande WO 03/16837.

Lorsque la composition selon l'invention est destinée à des bandes de roulement de pneumatique à faible résistance au roulement, la charge inorganique renforçante utilisée, en particulier s'il s'agit de silice, a de préférence une surface BET comprise entre 45 et 400 $m^2/g$, plus préférentiellement comprise entre 60 et 300 $m^2/g$.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) $$Z - A - S_x - A - Z,$$

dans laquelle:

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

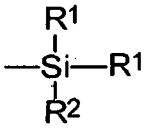 ; 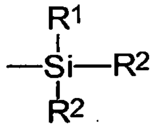 ; 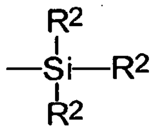 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle

ou phényle, notamment des groupes alkyle en $C_1$-$C_4$, plus particulièrement le méthyle et/ou l'éthyle).

- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfure, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

II.5 Système de réticulation

Le système de réticulation proprement dit est à base de soufre (ou d'un agent donneur de soufre) et d'un accélérateur primaire de réticulation. A ce système de réticulation de base viennent s'ajouter, incorporés au cours de la première phase non-productive et/ou au cours de la phase productive telles que décrites ultérieurement, divers accélérateurs secondaires ou activateurs de réticulation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 0,5 et 5 pce, en particulier entre 0,5 et 3 pce lorsque la composition de l'invention est destinée, selon un mode préférentiel de l'invention, à constituer une bande de roulement de pneumatique.

L'accélérateur primaire de réticulation est quant à lui utilisé à un taux préférentiel variant de 0,5 à 10 pce, plus préférentiellement compris de 0,5 à 5 pce.

L'accélérateur primaire de réticulation doit permettre une réticulation des compositions de caoutchouc dans des temps industriellement acceptables, tout en préservant un délai minimum de sécurité (« temps de grillage ») au cours duquel les compositions peuvent être mises en forme sans risque de réticulation prématurée (« grillage »).

On peut utiliser tout composé susceptible d'agir comme accélérateur de réticulation des élastomères diéniques en présence de soufre.

Conviennent en particulier les accélérateurs du type thiazoles ainsi que leurs dérivés de formule (I) :

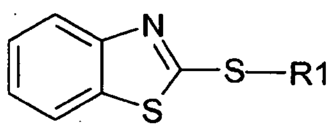

(I)

dans laquelle $R^1$ représente un atome d'hydrogène, un groupement 2-mercapto benzothiazyle de formule (II) :

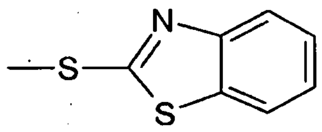

(II)

ou encore un groupement de formule (III) :

-$NR^2R^3$ (III)

dans laquelle $R^2$ et $R^3$ représentent indépendamment un atome d'hydrogène, un groupement 2-mercaptobenzothiazyle (formule (II)), un groupement alkyle en C1-C4 ou un groupement cycloalkyle en C5-C8, comportant de préférence 6 maillons, ledit cycle pouvant comporter au moins un hétéroatome tel que S, O ou N.

Des accélérateurs thiazoles et dérivés préférentiels sont notamment choisis dans le groupe constitué par le 2-mercaptobenzothiazole, le disulfure de 2-mercapto-benzothiazyle (en abrégé « MBTS »), le N-cyclohexyl-2-benzothiazyle sulfénamide (en abrégé « CBS »), le N,N-dicyclohexyl-2-benzothiazyle sulfénamide (en abrégé « DCBS »), le N-ter-butyl-2-benzothiazyle sulfénamide (en abrégé « TBBS »), le N-cyclohexyl-2-benzothiazyle sulfénimide, le N-ter-butyl-2-benzothiazyle sulfénimide (en abrégé « TBSI ») et les mélanges de ces composés.

Le système de réticulation de la composition selon l'invention peut également comprendre un ou plusieurs accélérateurs primaires additionnels, en particulier les composés de la famille des thiurames, les dérivés dithiocarbamates de zinc ou les thiophosphates.

II-6. Additifs divers

La composition de caoutchouc selon l'invention peut comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone (telle que la Cire Ozone C32 ST), anti-ozonants chimiques, anti-oxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269.

De préférence, la composition selon l'invention comporte, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

La composition selon l'invention peut également contenir, en complément des agents de couplage, des activateurs de couplage, des agents de recouvrement de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique.

II-7. Fabrication des compositions de caoutchouc

La composition de caoutchouc selon l'invention est fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale qui, selon l'invention, est supérieure à la plus élevée des températures de fusion ou de ramollissement des matériaux thermoplastiques et agents compatibilisants lorsque les matériaux thermoplastiques et agents compatibilisants sont introduits séparément, ou supérieure à la température de fusion ou de ramollissement du mélange maître lorsque les matériaux thermoplastiques et agents compatibilisants sont introduits sous la forme d'un mélange maître, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base de la composition de

l'invention, à l'exception du système de réticulation, à savoir la ou les charges renforçantes, les particules du ou des matériaux thermoplastiques de température de fusion ou de ramollissement $T_{M1}$, le ou les agents compatibilisants de température de fusion ou de ramollissement $T_{M2}$, et l'agent de couplage le cas échéant, sont incorporés de manière intime, par malaxage, à l'élastomère diénique ou aux élastomères diéniques au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale supérieure à la plus élevée des températures $T_{M1}$ et $T_{M2}$. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation, à basse température, généralement dans un mélangeur externe tel qu'un mélangeur à cylindres; le tout est alors mélangé (phase productive) pendant quelques minutes, par exemple entre 2 et 15 min.

Les particules du ou des matériaux thermoplastiques et les agents compatibilisants doivent être introduits lors de la phase non-productive qui se fait à température élevée, puisque l'on veut qu'il y ait fusion et/ou coalescence des particules thermoplastiques et de l'agent compatibilisant après leur introduction dans le mélangeur.

Selon un mode de réalisation alternatif, les particules du ou des matériaux thermoplastiques et le ou les agents compatibilisants sont introduits au cours de la première étape dite « non-productive » sous la forme d'un mélange maître préalablement préparé. Dans ce cas, la ou les charges renforçantes, le mélange maître de température de fusion ou de ramollissement $T_M$, et l'agent de couplage le cas échéant, sont incorporés de manière intime, par malaxage, à l'élastomère diénique ou aux élastomères diéniques au cours de la première phase dite non-productive, jusqu'à atteindre une température maximale supérieure à la température $T_M$. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation, à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une planque, notamment pour une caractérisation au laboratoire, ou encore extrudée sous la forme d'un profilé de caoutchouc utilisable par exemple comme une bande de roulement de pneumatique pour véhicule tourisme.

**III. Exemple de réalisation de l'invention**

III-1. Préparation des compositions

On procède pour les essais qui suivent de la manière suivante: on introduit dans un mélangeur interne, rempli à 70% et dont la température initiale de cuve est d'environ 90°C, le ou les élastomères diéniques, la ou les charges renforçantes, l'agent de couplage éventuel, l'agent compatibilisant éventuel et les particules du matériau thermoplastique dans le cas où il y a un agent compatibilisant puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute le système de vulcanisation (soufre et composé thiazole) et les particules de matériau thermoplastique dans le cas où il n'y a pas d'agent compatibilisant sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

III-2 Essais de caractérisation - Résultats

Exemple 1

L'objet de cet exemple est de comparer les propriétés dynamiques d'une composition de caoutchouc utilisable pour la fabrication d'une bande de roulement de pneumatique comprenant des particules de polystyrène et un agent compatibilisant (composition 2) avec les propriétés d'une composition de caoutchouc ne comprenant pas d'agent compatibilisant (composition 1) et d'une composition de caoutchouc ne comprenant ni particule de polystyrène ni agent compatibilisant (composition 0).

Les formulations des compositions de caoutchouc sont données dans le tableau 1. Les quantités sont exprimées en parties pour 100 parties en poids d'élastomère (pce).

Les taux d'huile et de résine plastifiante ont été ajustés pour obtenir sensiblement le même module dynamique

G' à température ambiante.

Tableau 1

| | | Composition 0 | Composition 1 | Composition 2 |
|---|---|---|---|---|
| MI | SBR 1 (1) | 40 | 40 | 40 |
| | SBR 2 (2) | 60 | 60 | 60 |
| | noir de carbone (3) | 4 | 4 | 4 |
| | silice (4) | 92 | 92 | 92 |
| | antioxydant (5) | 2 | 2 | 2 |
| | huile plastifiante (6) | 20,5 | 29 | 29 |
| | cire anti-ozone (7) | 1,5 | 1,5 | 1,5 |
| | résine plastifiante (8) | 21 | 29 | 29 |
| | agent de couplage (9) | 7,4 | 7,4 | 7,4 |
| | acide stéarique (10) | 2 | 2 | 2 |
| | DPG (11) | 1,5 | 1,5 | 1,5 |
| | oxyde de zinc (12) | 2,8 | 2,8 | 2,8 |
| | Particules de polystyrène (13) | | | 25 |
| | Agent compatibilisant (14) | | | 15 |
| ME | accélérateur (15) | 2,1 | 2,1 | 2,1 |
| | CTP (16) | 0,15 | 0,15 | 0,15 |
| | Soufre | 1,4 | 1,4 | 1,4 |
| | particules de polystyrène (13) | - | 30 | - |

MI : mélangeur interne
ME : mélangeur externe
(1) SSBR avec 40% de styrène (% massique en styrène / totalité du polymère), 24% de motifs polybutadiène 1-2 et 48% de motifs polybutadiène 1-4 trans (% en motifs 1,2 ou 1,4 / totalité du polybutadiène) ;
(2) SSBR avec 28% de styrène, 4% de motifs polybutadiène 1-2 et 81% de motifs polybutadiène 1-4 trans (% en motifs 1,2 ou 1,4 / totalité du polybutadiène) ;
(3) noir de carbone N234 (grade ASTM - société Degussa) ;
(4) silice « Zéosil 1165MP » de la société Rhodia sous forme de microperles (BET et CTAB : environ 150-160 $m^2/g$) ;
(5) N-1,3-diméthylbutyl-N-phénylparaphénylènediamine (« Santoflex 6-PPD » de la société Flexsys) ;
(6) huile TDAE (Treated Distillate Aromatic Extracts) ;
(7) mélange de cires anti-ozone macro- et microcristallines ;
(8) résine hydrocarbonée type C5 (« Wingtack 86 » de la société Crayvalley) ;
(9) TESPT (« Si69 » de la société Degussa) ;
(10) stéarine (« Pristerene 4931 » - société Uniqema) ;
(11) diphénylguanidine (« Perkacit DPG » de la société Flexsys) ;
(12) oxyde de zinc (grade industriel - société Umicore) ;
(13) « Primecast 101 » (société EOS GmbH) ; Tg = 105 °C, diamètre moyen volumique : 80 μm (données fournisseur) ;
(14) « Kraton D1118 » : copolymère diblocs styrène/butadiène de la société Kraton Polymers ;
(15) N-cyclohexyl-2-benzothiazyl-sulfénamide (« Santocure CBS » de la société Flexsys) ;
(16) Cyclohexylthiopthalimide (PVI).

On mesure l'évolution du module dynamique G' de chaque composition en fonction de la température, sous une contrainte de 0,7 Mpa.

Résultats

Les résultats sont donnés sur les figures 1 et 2.

Sur la figure 1, la courbe C0 représente la variation du module dynamique de la composition 0, la courbe C1 représente la variation du module dynamique de la composition 1 et la courbe C2 représente la variation du module élastique de la composition 2 selon l'invention.

On constate une forte diminution du module au-delà de 80°C.

Ainsi, par exemple :

$$(G'_{40°C}-G'_{140°C})/G'_{40°C} = 31\% \text{ pour la composition 0}$$

$$(G'_{40°C}-G'_{140°C})/G'_{40°C} = 64\% \text{ pour la composition 1}$$

$$(G'_{40°C}-G'_{140°C})/G'_{40°C} = 68\% \text{ pour la composition 2 selon l'invention.}$$

Ainsi, l'introduction de particules de polystyrène dans la composition de caoutchouc permet un ramollissement de celle-ci à haute température.

Sur la figure 2, la courbe C0' représente la variation du module sécant vrai de la composition 0, la courbe C1' la variation du module sécant vrai de la composition 1, la courbe C2' la variation du module sécant vrai de la composition 2.

La figure 2 montre que la contrainte de rupture de la composition 2 est sensiblement améliorée par rapport à celle de la composition 1. Cela traduit le fait que l'agent compatibilisant améliore la liaison entre les particules de matériau thermoplastique et la matrice d'élastomère diénique.

Exemple 2

L'objet de cet exemple est de comparer les propriétés dynamiques d'une composition comprenant des particules de polyphénylène éther et un agent compatibilisant préparée par le procédé selon l'invention (mélange B) avec les propriétés d'une composition de caoutchouc de même composition mais obtenue par un procédé différent du procédé selon l'invention (mélange A).

Les formulations des mélanges sont données dans le tableau 1. Les quantités sont exprimées en parties pour 100 parties en poids d'élastomère (pce).

Tableau 1

| | | Mélange A (pce) | Mélange B (pce) |
|---|---|---|---|
| BR | (1) | 68 | 68 |
| SB/ SBS | (2) | 48 | 0 |
| PPE | (3) | 16 | 0 |
| Masterbatch PPE/SB | (4) | 0 | 64 |
| Agent anti-oxydant | (5) | 1,3 | 1,3 |
| Acide Stéarique | (6) | 0,5 | 0,5 |
| ZnO | (7) | 3 | 3 |
| CBS | (8) | 1,2 | 1,2 |

(suite)

| | Mélange A (pce) | Mélange B (pce) |
|---|---|---|
| Soufre | 1,4 | 1,4 |
| (1) BR solution (taux exprimés en BR sec : 4 % des motifs polybutadiène en 1-2 et 93% des motifs polybutadiène en 1-4 cis (Tg = - 104°C) ;<br>(2) Grade de SB/SBS D1118 AS de la société Kraton<br>(3) Grade de PPE (polyphénylène éther) « basse masse » Noryl SA120 (Mw=6300 g/mol et Tg=165°C ; données fournisseur)<br>(4) Mélange maître (effectué en solution) de (2) et (3) dans des proportions massiques respectivement de 3/1<br>(5) N-1,3-diméthylbutyl-N-phénylparaphénylènediamine (Santoflex 6-PPD de la société Flexsys) ;<br>(6) stéarine ("Pristerene" de la société Uniquema);<br>(7) oxyde de zinc (grade industriel - société Umicore) ;<br>(8) N-cyclohexyl-2-benzothiazyl-sulfénamide (Santocure CBS de la société Flexsys) ; | | |

<u>Préparation du mélange A</u> :

On introduit au mélangeur interne, dont la température initiale de cuve est d'environ 90°C, l'élastomère diénique (1), les particules de matériau thermoplastique (3) et l'agent compatibilisant (2). On malaxe (phase non-productive) afin de monter en température de manière constante (par augmentation progressive de la vitesse des palettes).
A 100°C, on introduit l'agent anti-oxydant (5) et l'acide stéarique (6).
A 130°C, on introduit l'oxyde de zinc (7).
On monte en température jusqu'à atteindre une température de « tombée » d'environ 150°C, si le couple est quasi-constant. Cette température est inférieure à la température de fusion ou de ramollissement du polyphénylène éther.
On observe des infondus de petite taille en sortie du mélangeur interne. On récupère le mélange ainsi obtenu, on le refroidit, puis on ajoute le système de vulcanisation (soufre et CBS (8)) sur un mélangeur externe à 70°C, en mélangeant le tout pendant environ 5 à 6 minutes.

<u>Préparation du mélange B</u> :

Un mélange maître (4) a été préparé préalablement en solution dans du toluène, puis coagulé à l'éthanol en enfin séché. Le mélange maître a été réalisé en solution dans un mélangeur à palettes chauffé type mélangeur interne selon l'état de l'art. Ce mélange maître comporte le SB (2) et le PPE(3) dans les proportions massiques que l'on retrouve dans le mélange (A), à savoir 3 de SB pour 1 de PPE.
On introduit au mélangeur interne, dont la température initiale de cuve est d'environ 90°C, l'élastomère diénique (1) et le mélange maître (4). On malaxe (phase non-productive) afin de monter en température de manière constante (par augmentation progressive de la vitesse des palettes).
A 100°C, on introduit l'agent anti-oxydant (5) et l'acide stéarique (6).
A 130°C, on introduit l'oxyde de zinc (7).
On monte en température jusqu'à atteindre une température de « tombée » d'environ 150°C, si le couple est quasi-constant. Cette température est supérieure à la température de fusion ou de ramollissement du mélange maître.
On récupère le mélange ainsi obtenu, on le refroidit, puis on ajoute le système de vulcanisation (soufre et CBS (8)) sur un mélangeur externe à 70°C, en mélangeant le tout pendant environ 5 à 6 minutes.

<u>Résultats</u>

Les résultats sont donnés sur la figure 3, qui montre que la contrainte de rupture de la composition B est sensiblement améliorée par rapport à celle de la composition A.

**Revendications**

1. Composition de caoutchouc utilisable notamment pour la fabrication de pneumatiques, à base d'un ou plusieurs élastomères diéniques, d'une ou plusieurs charges renforçantes et d'un système de réticulation, comprenant des particules d'un ou plusieurs matériaux thermoplastiques choisis parmi les matériaux thermoplastiques de températures de fusion ou de ramollissement variant de 80 à 300°C, **caractérisée en ce qu'**elle contient un ou plusieurs

agents compatibilisants choisis parmi les copolymères à blocs comprenant au moins un premier bloc élastomère diénique, et au moins un second bloc thermoplastique compatible avec le ou lesdits matériaux thermoplastiques.

**2.** Composition selon la revendication 1, **caractérisée en ce que** le ou les matériaux thermoplastiques sont choisis parmi les polypropylènes, les polyéthylènes, les polystyrènes, les copolymères acrylonitrile/butadiène/styrène, les polyacrylates, les polyamides, les polyphénylène éthers, les polycarbonates, les polyacétals, les polyuréthannes thermoplastiques, les polymères thermoplastiques fluorés et les polyesters.

**3.** Composition selon la revendication 2, **caractérisée en ce que** les polyesters sont choisis parmi les polyéthylène téréphtalates, les polybutylène téréphtalates et les polyéthylène naphtoates.

**4.** Composition selon la revendication 2, **caractérisée en ce que** les polymères fluorés sont choisis parmi les copolymères de tétrafluoréthylène et hexafluoropropène, les copolymères de tétrafluoréthylène et perfluorovinyléther, les copolymères de tétrafluoréthylène et d'éthylène et le polyfluorure de vinylidène.

**5.** Composition selon la revendication 2, **caractérisé en ce que** le matériau thermoplastique est un polyméthylméthacrylate.

**6.** Composition selon l'une quelconque des revendications précédentes, **caractérisée en ce que** les températures de fusion ou de ramollissement du ou des matériaux thermoplastiques varie de 80°C à 200°C.

**7.** Composition selon l'une quelconque des revendications précédentes **caractérisée en ce que** les particules présentent un diamètre moyen volumique inférieur ou égal à 200 μm, de préférence inférieur à 100 μm, mieux compris entre 50 et 100 μm.

**8.** Composition selon l'une quelconque des revendications précédentes, **caractérisée en ce que** les particules du ou desdits matériaux thermoplastiques représentent moins de 100 pce et de préférence de 10 à 70 pce.

**9.** Composition selon l'une quelconque des revendications précédentes, **caractérisée en ce que** le ou les élastomères diéniques de la composition sont choisis dans le groupe constitué par les polybutadiènes, le caoutchouc naturel, les polyisoprènes de synthèse, les copolymères de butadiène, les copolymères d'isoprène et les mélanges de ces élastomères.

**10.** Composition selon la revendication 9, **caractérisée en ce que** l'élastomère diénique est un copolymère de butadiène-styrène.

**11.** Composition selon l'une quelconque des revendications précédentes, **caractérisée en ce que** le ou les agents compatibilisants sont des copolymères diblocs.

**12.** Composition selon l'une quelconque des revendications 1 à 10, **caractérisée en ce que** le ou les agents compatibilisants sont des copolymères triblocs comprenant un premier bloc élastomère diénique et deux second blocs thermoplastiques.

**13.** Composition selon l'une quelconque des revendications 1 à 10, **caractérisée en ce qu'**elle comprend à titre d'agents compatibilisants un ou plusieurs agents compatibilisants qui sont des copolymères diblocs et un ou plusieurs agents compatibilisants qui sont des copolymères triblocs comprenant un premier bloc élastomère diénique et deux second blocs thermoplastiques.

**14.** Composition selon l'une quelconque des revendications 11 à 13, **caractérisée en ce que** les copolymères diblocs sont choisis parmi les copolymères diblocs styrène/butadiène, les copolymères diblocs styrène/isoprène et les copolymères diblocs styrène/(copolymère styrène/butadiène statistique).

**15.** Composition selon l'une quelconque des revendications 11 à 13, **caractérisée en ce que** les copolymères triblocs sont choisis parmi les copolymères triblocs styrène/butadiène/styrène, les copolymères triblocs styrène/isoprène/styrène, les copolymères triblocs styrène/(copolymère styrène/butadiène statistique)/styrène et les copolymères triblocs styrène/ butadiène /méthacrylate.

**16.** Composition selon l'une quelconque des revendications précédentes, **caractérisée en ce que** les particules de

matériau thermoplastique sont des particules de polystyrène et le ou les agents compatibilisants sont choisis parmi les copolymères diblocs styrène/butadiène, les copolymères diblocs styrène/isoprène, les copolymères triblocs styrène/butadiène/styrène, les copolymères triblocs styrène/isoprène/styrène, et leurs mélanges.

**17.** Composition selon l'une quelconque des revendications précédentes **caractérisée en ce que** les particules de matériau thermoplastique sont des particules de polyphénylène éther et le ou les agents compatibilisants sont choisis parmi les copolymères diblocs styrène/butadiène, les copolymères diblocs styrène/isoprène, les copolymères triblocs styrène/butadiène/styrène, les copolymères triblocs styrène/isoprène/styrène et leurs mélanges.

**18.** Composition selon l'une quelconque des revendications précédentes, **caractérisée en ce que** la somme du volume des particules et du volume desdits second blocs thermoplastiques compatibles avec le ou lesdits matériaux thermoplastiques est inférieure ou égale à 45% du volume total de la composition.

**19.** Composition selon l'une quelconque des revendications précédentes **caractérisée en ce que** le rapport volumique particules/agent(s) compatibilisant(s) est supérieur ou égal à 0,05.

**20.** Composition selon l'une quelconque des revendications précédentes, **caractérisée en ce que** la ou les charges renforçantes sont choisies parmi la silice, le noir de carbone et leurs mélanges.

**21.** Composition selon l'une quelconque des revendications précédentes, **caractérisée en ce que** la ou les charges renforçantes sont présentes à un taux compris entre 20 et 200 pce, de préférence entre 30 et 150 pce.

**22.** Procédé de fabrication d'une composition de caoutchouc, à base d'un ou plusieurs élastomères diéniques, d'une ou plusieurs charges renforçantes et d'un système de réticulation, comprenant des particules d'un ou plusieurs matériaux thermoplastiques de température de fusion ou de ramollissement ($T_{M1}$) variant de 80 à 300°C et un ou plusieurs agents compatibilisants de température de fusion ou de ramollissement ($T_{M2}$) choisis parmi les copolymères à blocs comprenant au moins un premier bloc élastomère diénique et au moins un second bloc thermoplastique compatible avec le ou lesdits matériaux thermoplastiques, **caractérisé en ce qu'**il comprend les étapes suivantes :

- incorporer à ou aux élastomères diéniques, au cours d'une première étape dite « non-productive », les particules du ou desdits matériaux thermoplastiques et le ou les agents compatibilisants, séparément ou sous la forme d'un mélange maître préparé au préalable, et la ou les charges renforçantes, en malaxant thermomécaniquement le tout, en une ou plusieurs fois, jusqu'à atteindre une température maximale supérieure à la plus élevée des températures de fusion ou de ramollissement ($T_{M1}$, $T_{M2}$) desdits matériaux thermoplastiques et agents compatibilisants, ou supérieure à la température de fusion ou de ramollissement $T_M$ dudit mélange maître dans le cas où les particules du ou desdits matériaux thermoplastiques et le ou les agents compatibilisants ont été introduits sous forme d'un mélange maître,
- refroidir l'ensemble à une température inférieure à 100°C,
- incorporer ensuite, au cours d'une seconde étape dite « productive », le système de réticulation, puis
- malaxer le tout jusqu'à une température maximale inférieure à 120°C.

**23.** Utilisation d'une composition selon l'une quelconque des revendications 1 à 21, pour la fabrication d'un article fini ou d'un produit semi-fini destiné à un système de liaison au sol de véhicule automobile.

**24.** Article fini ou produit semi-fini destiné à un système de liaison au sol de véhicule automobile, comprenant une composition selon l'une quelconque des revendications 1 à 21.

**25.** Pneumatique comprenant une composition de caoutchouc telle que définie à l'une quelconque des revendications 1 à 21.

## Patentansprüche

**1.** Kautschukzusammensetzung, die insbesondere zur Herstellung von Reifen verwendet werden kann, auf Basis eines oder mehrerer Dienelastomere, eines oder mehrerer verstärkender Füllstoffe und eines Vernetzungssystems, umfassend Teilchen aus einem oder mehreren thermoplastischen Materialien, die aus thermoplastischen Materialien mit Schmelz- oder Erweichungstemperaturen im Bereich von 80 bis 300°C ausgewählt sind, **dadurch gekennzeichnet, dass** sie einen oder mehrere Verträglichkeitsvermittler, die aus Blockcopolymeren mit mindestens einem

ersten Dienelastomerblock und mindestens einem zweiten thermoplastischen Block, der mit dem bzw. den thermoplastischen Materialien verträglich ist, ausgewählt sind, enthält.

2. Zusammensetzung nach Anspruch 1, **dadurch gekennzeichnet, dass** das bzw. die thermoplastischen Materialien aus Polypropylenen, Polyethylenen, Polystyrolen, Acrylnitril/Butadien/Styrol-Copolymeren, Polyacrylaten, Polyamiden, Polyphenylenethern, Polycarbonaten, Polyacetalen, thermoplastischen Polyurethanen, thermoplastischen Fluorpolymeren und Polyestern ausgewählt sind.

3. Zusammensetzung nach Anspruch 2, **dadurch gekennzeichnet, dass** die Polyester aus Polyethylenterephthalaten, Polybutylenterephthalaten und Polyethylennaphthoaten ausgewählt sind.

4. Zusammensetzung nach Anspruch 2, **dadurch gekennzeichnet, dass** die Fluorpolymere aus Copolymeren von Tetrafluorethylen und Hexafluorpropen, Copolymeren von Tetrafluorethylen und Perfluorvinylether, Copolymeren von Tetrafluorethylen und Ethylen und Polyvinylidenfluorid ausgewählt sind.

5. Zusammensetzung nach Anspruch 2, **dadurch gekennzeichnet, dass** es sich bei dem thermoplastischen Material um ein Polymethylmethacrylat handelt.

6. Zusammensetzung nach einem der vorhergehenden Ansprüche, **dadurch gekennzeichnet, dass** die Schmelz- oder Erweichungstemperaturen des bzw. der thermoplastischen Materialien im Bereich von 80°C bis 200°C liegen.

7. Zusammensetzung nach einem der vorhergehenden Ansprüche, **dadurch gekennzeichnet, dass** die Teilchen einen volumenmittleren Durchmesser kleiner gleich 200 μm, vorzugsweise kleiner 100 μm, noch besser zwischen 50 und 100 μm aufweisen.

8. Zusammensetzung nach einem der vorhergehenden Ansprüche, **dadurch gekennzeichnet, dass** die Teilchen aus dem bzw. den thermoplastischen Materialien weniger als 100 phe und vorzugsweise 10 bis 70 phe ausmachen.

9. Zusammensetzung nach einem der vorhergehenden Ansprüche, **dadurch gekennzeichnet, dass** das bzw. die Dienelastomere der Zusammensetzung aus der Gruppe bestehend aus Polybutadienen, Naturkautschuk, synthetischen Polyisoprenen, Butadien-Copolymeren, Isopren-Copolymeren und Mischungen dieser Elastomere ausgewählt sind.

10. Zusammensetzung nach Anspruch 9, **dadurch gekennzeichnet, dass** es sich bei dem Dienelastomer um ein Butadien-Styrol-Copolymer handelt.

11. Zusammensetzung nach einem der vorhergehenden Ansprüche, **dadurch gekennzeichnet, dass** es sich bei dem bzw. den Verträglichkeitsvermittlern um Diblockcopolymere handelt.

12. Zusammensetzung nach einem der Ansprüche 1 bis 10, **dadurch gekennzeichnet, dass** es sich bei dem bzw. den Verträglichkeitsvermittlern um Triblockcopolymere mit einem ersten Dienelastomerblock und zwei zweiten thermoplastischen Blöcken handelt.

13. Zusammensetzung nach einem der Ansprüche 1 bis 10, **dadurch gekennzeichnet, dass** sie als Verträglichkeitsvermittler einen oder mehrere Verträglichkeitsvermittler, bei denen es sich um Diblockcopolymere handelt, und einen oder mehrere Verträglichkeitsvermittler, bei denen es sich um Triblockcopolymere mit einem ersten Dienelastomerblock und zwei zweiten thermoplastischen Blöcken handelt, umfasst.

14. Zusammensetzung nach einem der Ansprüche 11 bis 13, **dadurch gekennzeichnet, dass** die Diblockcopolymere aus Styrol/Butadien-Diblockcopolymeren, Styrol/Isopren-Diblockcopolymeren und Styrol/(statistisch aufgebautes Styrol/Butadien-Copolymer)-Diblockcopolymeren ausgewählt sind.

15. Zusammensetzung nach einem der Ansprüche 11 bis 13, **dadurch gekennzeichnet, dass** die Triblockcopolymere aus Styrol/Butadien/Styrol-Triblock-copolymeren, Styrol/Isopren/Styrol-Triblock-copolymeren, und Styrol/(statistisch aufgebautes Styrol/Butadien-Copolymer)/Styrol-Triblockcopolymeren und Styrol/Butadien/Methacrylat-Triblockcopolymeren ausgewählt sind.

16. Zusammensetzung nach einem der vorhergehenden Ansprüche, **dadurch gekennzeichnet, dass** es sich bei den

Teilchen aus thermoplastischem Material um Polystyrolteilchen handelt und der bzw. die Verträglichkeitsvermittler aus Styrol/Butadien-Diblockcopolymeren, Styrol/Isopren-Diblockcopolymeren, Styrol/Butadien/Styrol-Triblockcopolymeren, Styrol/Isopren/Styrol-Triblockcopolymeren und Mischungen davon ausgewählt sind.

**17.** Zusammensetzung nach einem der vorhergehenden Ansprüche, **dadurch gekennzeichnet, dass** es sich bei den Teilchen aus thermoplastischem Material um Polyphenylenetherteilchen handelt und der bzw. die Verträglichkeitsvermittler aus Styrol/Butadien-Diblockcopolymeren, Styrol/Isopren-Diblockcopolymeren, Styrol/Butadien/Styrol-Triblockcopolymeren, Styrol/Isopren/Styrol-Triblockcopolymeren und Mischungen davon ausgewählt sind.

**18.** Zusammensetzung nach einem der vorhergehenden Ansprüche, **dadurch gekennzeichnet, dass** die Summe des Volumens der Teilchen und des Volumens der zweiten thermoplastischen Blöcke, die mit dem bzw. den thermoplastischen Materialien verträglich sind, kleiner gleich 45% des Gesamtvolumens der Zusammensetzung ist.

**19.** Zusammensetzung nach einem der vorhergehenden Ansprüche, **dadurch gekennzeichnet, dass** das Teilchen/Verträglichkeitsvermittler-Volumenverhältnis größer gleich 0,05 ist.

**20.** Zusammensetzung nach einem der vorhergehenden Ansprüche, **dadurch gekennzeichnet, dass** der bzw. die verstärkenden Füllstoffe aus Kieselsäure, Ruß und Mischungen davon ausgewählt sind.

**21.** Zusammensetzung nach einem der vorhergehenden Ansprüche, **dadurch gekennzeichnet, dass** der bzw. die verstärkenden Füllstoffe in einem Gehalt zwischen 20 und 200 phe, vorzugsweise zwischen 30 und 150 phe, vorliegen.

**22.** Verfahren zur Herstellung einer Kautschukzusammensetzung auf Basis eines oder mehrerer Dienelastomere, eines oder mehrerer verstärkender Füllstoffe und eines Vernetzungssystems, umfassend Teilchen aus einem oder mehreren thermoplastischen Materialien mit einer Schmelz- oder Erweichungstemperatur ($T_{M1}$) im Bereich von 80 bis 300°C und einen oder mehrere Verträglichkeitsvermittler mit einer Schmelz- oder Erweichungstemperatur ($T_{M2}$), die aus Blockcopolymeren mit mindestens einem ersten Dienelastomerblock und mindestens einem zweiten thermoplastischen Block, der mit dem bzw. den thermoplastischen Materialien verträglich ist, ausgewählt sind, **dadurch gekennzeichnet, dass** man:

- im Lauf eines ersten, als "nichtproduktiv" bezeichneten Schritts in das Dienelastomer bzw. die Dienelastomere die Teilchen aus dem bzw. den thermoplastischen Materialien und den bzw. die Verträglichkeitsvermittler, separat oder in Form eines vorher hergestellten Masterbatch, und den bzw. die verstärkenden Füllstoffe einarbeitet, indem man das Ganze ein- oder mehrmals thermomechanisch knetet, bis eine Höchsttemperatur, die über den Schmelz- bzw. Erweichungstemperaturen ($T_{M1}$, $T_{M2}$) der thermoplastischen Materialien und Verträglichkeitsvermittler bzw. in dem Fall, dass die Teilchen aus dem bzw. den thermoplastischen Materialien und der bzw. die Verträglichkeitsvermittler in Form eines Masterbatch eingetragen werden, über der Schmelz- bzw. Erweichungstemperatur $T_M$ des Masterbatch liegt, erreicht ist,
- das Ganze auf eine Temperatur von weniger als 100°C abkühlt,
- dann im Lauf eines zweiten, als "produktiv" bezeichneten Schritts das Vernetzungssystem einarbeitet, dann
- das Ganze bis zu einer Höchsttemperatur von weniger als 120°C knetet.

**23.** Verwendung einer Zusammensetzung nach einem der Ansprüche 1 bis 21 zur Herstellung eines Fertigartikels oder Halbzeugs für ein Bodenkontaktsystem eines Kraftfahrzeugs.

**24.** Fertigartikel oder Halbzeug für ein Bodenkontaktsystem eines Kraftfahrzeugs, umfassend eine Zusammensetzung nach einem der Ansprüche 1 bis 21.

**25.** Reifen, umfassend eine Kautschukzusammensetzung gemäß einem der Ansprüche 1 bis 21.

## Claims

**1.** Rubber composition which can be used in particular in the manufacture of tyres, based on one or more diene elastomers, on one or more reinforcing fillers and on a crosslinking system, comprising particles of one or more thermoplastic materials chosen from thermoplastic materials with melting or softening points varying from 80°C to 300°C, **characterized in that** it comprises one or more compatibilizing agents chosen from block copolymers

comprising at least one first diene elastomer block and at least one second thermoplastic block compatible with the said thermoplastic material or materials.

2. Composition according to Claim 1, **characterized in that** the thermoplastic material or materials are chosen from polypropylenes, polyethylenes, polystyrenes, acrylonitrile/butadiene/styrene copolymers, polyacrylates, polyamides, polyphenylene ethers, polycarbonates, polyacetals, thermoplastic polyurethanes, thermoplastic fluoropolymers and polyesters.

3. Composition according to Claim 2, **characterized in that** the polyesters are chosen from polyethylene terephthalates, polybutylene terephthalates and polyethylene naphthoates.

4. Composition according to Claim 2, **characterized in that** the fluoropolymers are chosen from copolymers of tetrafluoroethylene and hexafluoropropene, copolymers of tetrafluoroethylene and perfluorovinyl ether, copolymers of tetrafluoroethylene and ethylene, and polyvinylidene fluoride.

5. Composition according to Claim 2, **characterized in that** the thermoplastic material is a polymethyl methacrylate.

6. Composition according to any one of the preceding claims, **characterized in that** the melting or softening points of the thermoplastic material or materials vary from 80°C to 200°C.

7. Composition according to any one of the preceding claims, **characterized in that** the particles exhibit a volume-average diameter of less than or equal to 200 μm, preferably of less than 100 μm and better still of between 50 and 100 μm.

8. Composition according to any one of the preceding claims, **characterized in that** the particles of the said thermoplastic material or materials represent less than 100 phr and preferably from 10 to 70 phr.

9. Composition according to any one of the preceding claims, **characterized in that** the diene elastomer or elastomers of the composition are chosen from the group consisting of polybutadienes, natural rubber, synthetic polyisoprenes, butadiene copolymers, isoprene copolymers and the mixtures of these elastomers.

10. Composition according to Claim 9, **characterized in that** the diene elastomer is a butadiene/styrene copolymer.

11. Composition according to any one of the preceding claims, **characterized in that** the compatibilizing agent or agents are diblock copolymers.

12. Composition according to any one of Claims 1 to 10, **characterized in that** the compatibilizing agent or agents are triblock copolymers comprising a first diene elastomer block and two second thermoplastic blocks.

13. Composition according to any one of Claims 1 to 10, **characterized in that** it comprises, as compatibilizing agents, one or more compatibilizing agents which are diblock copolymers and one or more compatibilizing agents which are triblock copolymers comprising a first diene elastomer block and two second thermoplastic blocks.

14. Composition according to any one of Claims 11 to 13, **characterized in that** the diblock copolymers are chosen from styrene/butadiene diblock copolymers, styrene/isoprene diblock copolymers and styrene/(random styrene/butadiene copolymer) diblock copolymers.

15. Composition according to any one of Claims 11 to 13, **characterized in that** the triblock copolymers are chosen from styrene/butadiene/styrene triblock copolymers, styrene/isoprene/styrene triblock copolymers, styrene/(random styrene/butadiene copolymer)/styrene triblock copolymers and styrene/butadiene/methacrylate triblock copolymers.

16. Composition according to any one of the preceding claims, **characterized in that** the particles of thermoplastic material are polystyrene particles and the compatibilizing agent or agents are chosen from styrene/butadiene diblock copolymers, styrene/isoprene diblock copolymers, styrene/butadiene/styrene triblock copolymers, styrene/isoprene/styrene triblock copolymers and their blends.

17. Composition according to any one of the preceding claims, **characterized in that** the particles of thermoplastic material are polyphenylene ether particles and the compatibilizing agent or agents are chosen from styrene/butadiene

diblock copolymers, styrene/isoprene diblock copolymers, styrene/butadiene/styrene triblock copolymers, styrene/isoprene/styrene triblock copolymers and their blends.

**18.** Composition according to any one of the preceding claims, **characterized in that** the sum of the volume of the particles and of the volume of the said second thermoplastic blocks compatible with the said thermoplastic material or materials is less than or equal to 45% of the total volume of the composition.

**19.** Composition according to any one of the preceding claims, **characterized in that** the particles/compatibilizing agent(s) ratio by volume is greater than or equal to 0.05.

**20.** Composition according to any one of the preceding claims, **characterized in that** the reinforcing filler or fillers are chosen from silica, carbon black and their mixtures.

**21.** Composition according to any one of the preceding claims, **characterized in that** the reinforcing filler or fillers are present at a content of between 20 and 200 phr, preferably between 30 and 150 phr.

**22.** Process for the manufacture of a rubber composition, based on one or more diene elastomers, on one or more reinforcing fillers and on a crosslinking system, comprising particles of one or more thermoplastic materials with melting or softening points ($T_{M1}$) varying from 80 to 300°C and one or more compatibilizing agents with melting or softening points ($T_{M2}$) chosen from block copolymers comprising at least one first diene elastomer block and at least one second thermoplastic block compatible with the thermoplastic material or materials, **characterized in that** it comprises the following stages:

- incorporating in the diene elastomer or elastomers, during a first "non-productive" stage, the particles of the said thermoplastic material or materials and the compatibilizing agent or agents, separately or in the form of a masterbatch prepared beforehand, and the reinforcing filler or fillers, everything being kneaded thermomechanically, in one or more goes, until a maximum temperature greater than the highest of the melting or softening points ($T_{M1}$, $T_{M2}$) of the said thermoplastic materials and compatibilizing agents, or greater than the melting or softening point $T_M$ of the said masterbatch, in the case where the particles of the said thermoplastic material or materials and the compatibilizing agent or agents were introduced in the form of a masterbatch, is reached,
- cooling the combined mixture to a temperature of less than 100°C,
- subsequently incorporating, during a second "productive" stage, the crosslinking system, then
- kneading everything up to a maximum temperature of less than 120°C.

**23.** Use of a composition according to any one of Claims 1 to 21 in the manufacture of a finished article or of a semifinished product intended for a motor vehicle ground-contact system.

**24.** Finished article or semifinished product intended for a motor vehicle ground-contact system, comprising a composition according to any one of Claims 1 to 21.

**25.** Tyre, comprising a rubber composition as defined in any one of Claims 1 to 21.

FIG.1

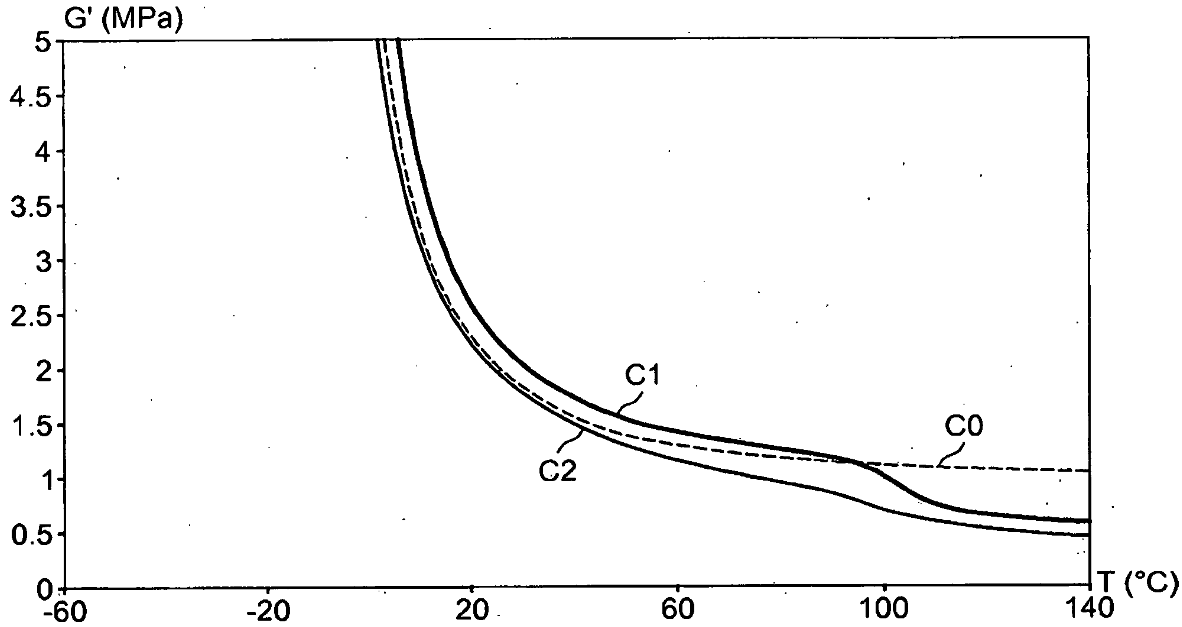

FIG.2

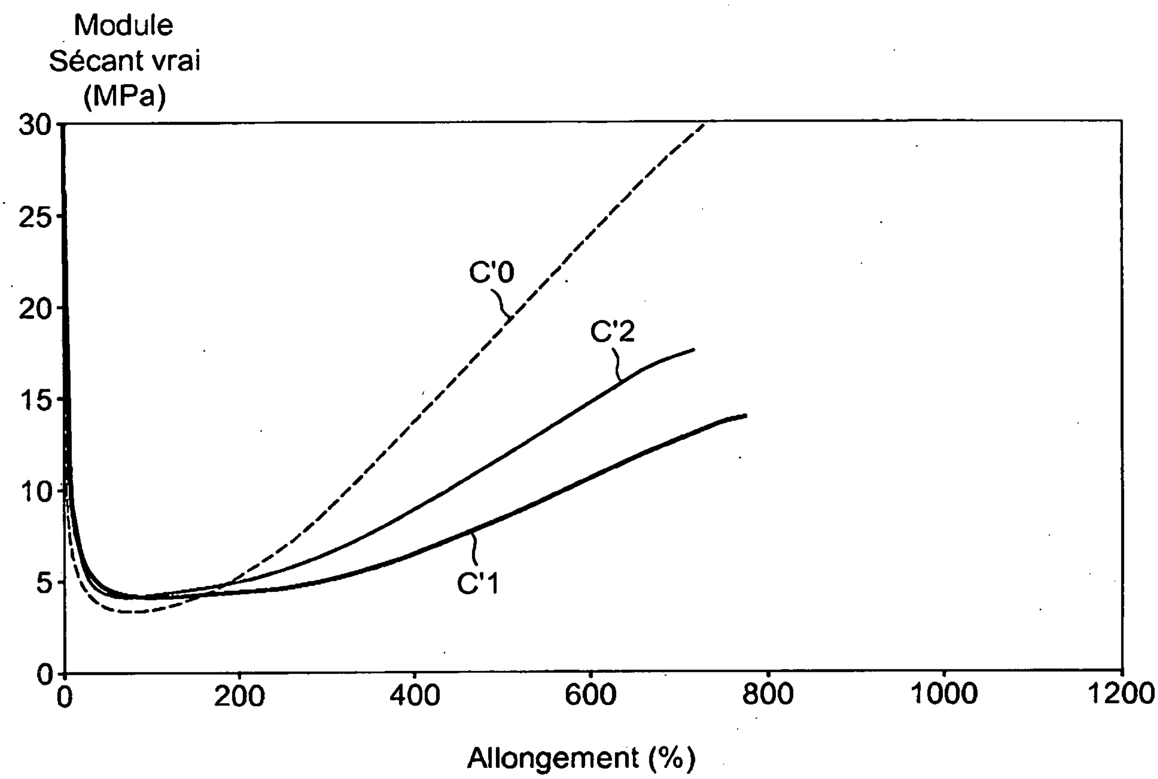
Module
Sécant vrai
(MPa)
30
25
20
15
10
5
0
0
200
400
600
800
1000
1200
Allongement (%)
C'0
C'2
C'1

FIG.3

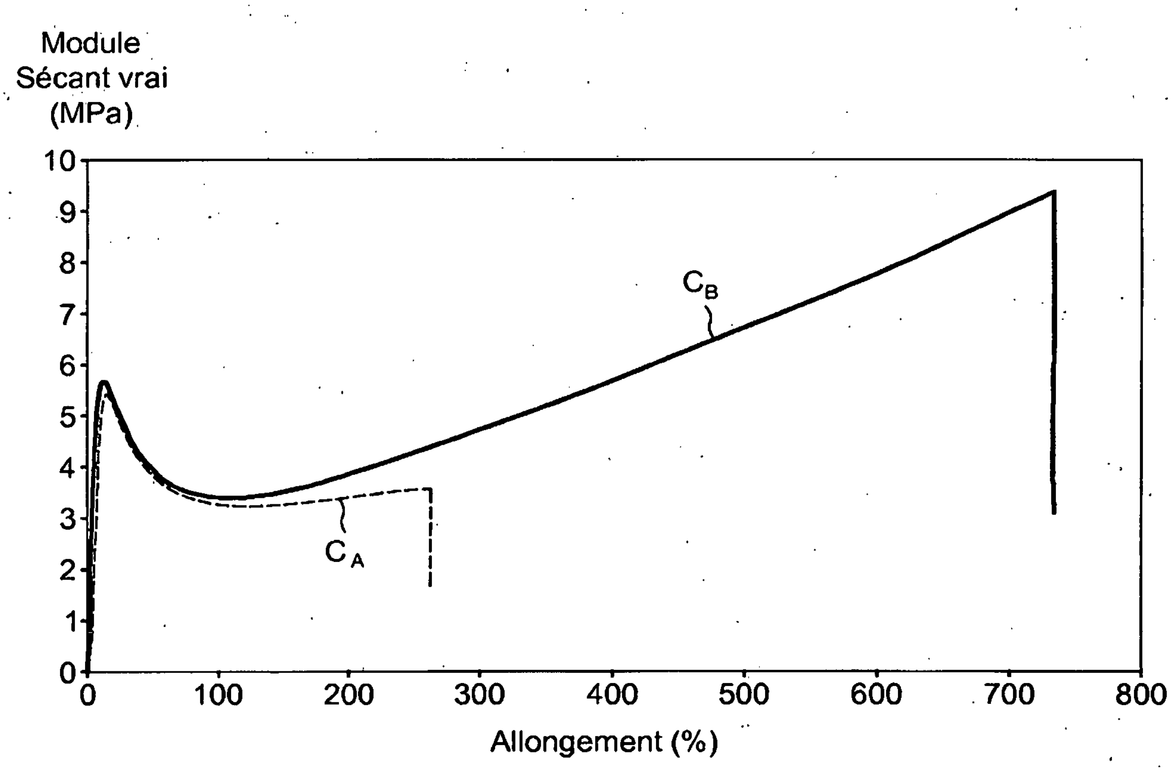
Module
Sécant vrai
(MPa)
10
9
8
7
6
5
4
3
2
1
0
0
100
200
300
400
500
600
700
800
Allongement (%)
$C_B$
$C_A$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2004039872 A
- US 2007208135 A
- US 2002019484 A
- EP 0117834 A
- EP 1344796 A
- US 6036800 A
- WO 9424208 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 9736724 A
- WO 9916600 A
- WO 2006069792 A
- WO 2006069793 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 0210269 A